# EUROPEAN PATENT APPLICATION

(11) **EP 2 562 031 A1**
(43) Date of publication of application: **27.02.2013**
(21) Application number: 11828487.6
(22) Date of filing: 07.03.2011
(51) Int. Cl.: B60N 2/16, A47C 7/02, A61G 3/00

(54) **VEHICLE SEAT**

(30) Priority: 01.10.2010 JP 2010223893
(71) Applicant: Toyota Shatai Kabushiki Kaisha, Kariya-shi Aichi 448-0002 (JP)
(72) Inventor: KURETAKE Hiroyuki, Kariya-shi Aichi 448-0002 (JP)
(74) Representative: Chettle, Adrian John
(86) International application number: PCT/JP2011/055194
(87) International publication number: WO 2012/042923

(57) **Abstract**

In a vehicle seat (10), when a front link (41) and a rear link (51) are respectively rotated, movable end side shaft portions (45 and 55) of the front link (41) and the rear link (51) can move in a vertical direction while moving in a front-back direction. Further, ranges in which the movable end side shaft portions (45 and 55) of the front link (41) and the rear link (51) can exist are set so as to be positioned over ranges that straddle horizontal lines (M and N) of stationary end side shaft portions (43 and 53) of the front link (41) and the rear link (51). Further, a rotational center connection line (L) is set so as to be raised forwards or inclined upwards and forwards. Therefore, an amount of change of a seat cushion (11) in a height direction can be increased while an amount of change of the seat cushion (11) in a front-back direction is minimized, so that the seat cushion (11) can be advantageously lifted up at a getting in/out time of the occupant.

## Description

### TECHNICAL FIELD

The present invention relates to a vehicle seat that is disposed in a vehicle such as an automobile. In particular, the present invention relates to a vehicle seat in which a seat cushion can be lifted up when an occupant gets in and out of a vehicle.

### BACKGROUND ART

A vehicle seat on which an occupant sits is disposed on a vehicle floor of an automobile. The vehicle seat has a seat cushion on which the occupant sits down. Further, there exists a vehicle seat having a lifter mechanism that is capable of changing a height of a seat cushion on which an occupant sits. A vehicle seat disclosed in each of Patent Document 1 and Patent Document 2 described below has two pairs of links (front links and rear links) that are respectively laterally juxtaposed in front and rear positions of the seat cushion. In each of the front links and the rear links, similar to a common link structure, a lower end thereof is rotatably connected to a base member disposed on the vehicle floor while an upper end thereof is rotatably connected to a cushion frame. Thus, the lower end of each of the links is positioned on the base member, so as to function as a stationary end of which the longitudinal position and the height cannot be changed even when the links are rotated. To the contrary, the upper end of each of the links is positioned on the cushion frame, so as to function as a movable end of which the longitudinal position and the height can be changed when the links are rotated.

Further, the rear links are coupled to a drive mechanism which is configured to rotate the rear link with respect to the vehicle floor. Upon actuation of this drive mechanism, the rear links are driven and rotated with respect to a stationary member disposed on the vehicle floor. Upon rotation of the rear links, the front links connected to the cushion frame are also concurrently rotated with respect to the stationary member disposed on the vehicle floor. Thus, a height of the seat cushion can be changed.

Further, the change in height of the seat cushion is performed in order to appropriately adjust a sitting posture of the occupant such that the sitting posture can conform to an occupant's body type. However, an amount of change of the height of the seat cushion taught by Patent Document 1 and Patent Document 2 is restricted to a small amount so as to correspond to an average difference of the occupant's body type.

### PRIOR ART DOCUMENT

### PATENT DOCUMENT

Patent Document 1: Japanese Laid-Open Patent Publication No. 9-30300
Patent Document 2: Japanese Laid-Open Patent Publication No. 2009-286237

### SUMMARY OF THE INVENTION

### PROBLEMS TO BE SOLVED BY THE INVENTION

The occupant may be an elderly person or other such person that has insufficient leg strength for getting out of the seat. Such an occupant cannot get up smoothly due to the insufficient leg strength when a posture of the occupant is changed from a sitting posture to a getting up posture. Thus, in order to allow such an occupant to easily get up from the seat cushion, there is a need for a structure in which a height in the getting up posture can be previously changed so as to be increased. That is, there is a need for a vehicle seat in which a height of the seat cushion can be sufficiently increased more than a normal height thereof when the occupant gets in and out of the vehicle.

However, the upper or movable end of each of the front links and the rear links is positioned on the rear of the lower or stationary end thereof. As a result, when the movable end of each of the front links and the rear links moves upwards, the movable end can also move forwards. Therefore, if a length of each of the links is increased, although an amount of change of the height of the seat cushion can be increased, an amount of change of a longitudinal position of the seat cushion can be simultaneously increased. Thus, when the height of the seat cushion is increased, the longitudinal position of the seat cushion can be simultaneously moved forwards. As a result, for example, in a case in which a vehicle interior ceiling is inclined forwards and downwards, the head of the occupant sitting on the seat cushion will contact the vehicle interior ceiling.

The present invention has been made in view of the problems described above. It is an object of the present invention to provide a vehicle seat in which a seat cushion can be lifted up when an occupant gets in and out of a vehicle and in which an amount of change of the seat cushion in a height direction can be increased while an amount of change of the seat cushion in a longitudinal direction can be minimized such that the seat cushion can be advantageously lifted up when the occupant gets in and out of the vehicle.

### MEANS FOR SOLVING THE PROBLEMS

In order to solve the problems described above, a vehicle seat of the present teaching employs the following measures.
A first invention of the present teaching provides a vehicle seat in which a seat cushion can be lifted up when an occupant gets in and out of a vehicle, wherein positioned between a base member disposed on a vehicle floor and a cushion frame constituting a framework of the seat cushion are a front link and a rear link for lifting up the cushion frame, the front link and the rear link being respectively positioned in a front position and a rear position in a front-back positional relation in a relative positional relation with reference to an occupant sitting on the seat cushion, wherein lower end side portions of the front link and the rear link are respectively formed as stationary end side shaft portions that are rotatably connected to the base member, wherein upper end side portions of the front link and the rear link are respectively formed as movable end side shaft portions that are rotatably connected to the cushion frame, wherein a connection line connecting the stationary end side shaft portions of the front link and the rear link is set so as to be raised toward the front position in the front-back positional relation or inclined upwards and forwards, and wherein ranges in which the movable end side shaft portions of the front link and the rear link can exist during the rotation of the front link and the rear link are set so as to be positioned over ranges that straddle horizontal lines of the stationary end side shaft portions of the front link and the rear link.

According to the vehicle seat of the first invention, when the front link and the rear link are respectively rotated about the stationary end side shaft portions as rotation axes, the movable end side shaft portions of the front link and the rear link can move in a vertical direction (a height direction) while moving in a front-back direction (a horizontal direction). However, the ranges in which the movable end side shaft portions of the front link and the rear link can exist during the rotation of the links are set so as to be positioned over the ranges that straddle the horizontal lines of the stationary end side shaft portions of the front link and the rear link. Therefore, the ranges may include switching points in which displacement directions of the movable end side shaft portions can be switched in the front-back direction (the horizontal direction) of the movable end side shaft portions while the movable end side shaft portions are displaced in the vertical direction (the height direction). That is, when the movable end shaft portions move while straddling the horizontal lines, the displacement directions of the movable end shaft portions can be switched in the front-back direction (the horizontal direction) at the moment that the movable end shaft portions straddle the horizontal lines. Thus, the rotation of the front link and the rear link is set so as to include the switching points in which the displacement directions of the movable end side shaft portions can be switched in the front-back direction (the horizontal direction). As a result, amounts of change of the movable end side shaft portions of the front link and the rear link in the vertical direction (the height direction) can be effectively increased as compared with amounts of change of the movable end side shaft portions in the front-back direction (the horizontal direction).
Further, in the vehicle seat of the first invention, the connection line connecting the stationary end side shaft portions of the front link and the rear link is set so as to be raised toward the front position in the front-back positional relation or inclined upwards and forwards. Therefore, the movable end side shaft portions can be prevented from being lowered beyond the connection line and prevented form being positioned below the connection line. In general, in a case in which the movable end side shaft portions are moved beyond the connection line and positioned below the connection line, the coordinated rotation of the front link and the rear link is prone to instability. However, according to the vehicle seat of the first invention, the coordinated rotation of the front link and the rear link can be prevented from being destabilized. As a result, such coordinated rotation can be stabilized.
As a result, according to the vehicle seat of the first invention, an amount of change of the seat cushion in the height direction can be increased while an amount of change of the seat cushion in the front-back direction is minimized. Thus, the seat cushion can be advantageously lifted up when the occupant gets in and out of the vehicle.

The vehicle seat according to a second invention corresponds to the vehicle seat of the first invention, wherein the range in which each of the movable end side shaft portions of the front link and the rear link can exist during the rotation of the front link and the rear link is set so as to include the same rotational ranges above and below the horizontal line of each of the stationary end side shaft portions of the front link and the rear link.
In the vehicle seat of the second invention, the range in which each of the movable end side shaft portions of the front link and the rear link can exist is set so as to include the same rotational ranges above and below the horizontal line of each of the stationary end side shaft portions of the front link and the rear link. Therefore, rotational ranges of the front link and the rear link can be set while the switching points in which displacement directions of the movable end side shaft portions can be switched in the front-back direction (the horizontal direction) are positioned in intermediate positions. As a result, the amounts of change of the movable end side shaft portions of the front link and the rear link in the vertical direction (the height direction) can be most effectively increased while the amounts of change thereof in the front-back direction (the horizontal direction) can be minimized.

The vehicle seat according to a third invention corresponds to the vehicle seat of the first or second invention, wherein vertical positions of lowermost ends of the movable end side shaft portions of the front link and the rear link are respectively set so as to be positioned above the connection line connecting the stationary end side shaft portions of the front link and the rear link.
In the vehicle seat of the third invention, the vertical positions of the lowermost ends of the movable end side shaft portions are respectively set so as to be positioned above the connection line connecting the stationary end side shaft portions. Therefore, the movable end side shaft portions can be effectively prevented from being lowered beyond the connection line and be prevented from being positioned below the connection line. Thus, instability in the coordinated rotation of the front link and the rear link can be minimized, so that the front link and the rear link can be stably rotated in conjunction with each other.

### EFFECTS OF THE INVENTION

According to the vehicle seat of the first invention, the amount of change in the height direction of the seat cushion can be increased while the amount of change in the front-back direction of the seat cushion is minimized. Thus, the seat cushion can be advantageously lifted up at the getting in/out time of the occupant.
According to the vehicle seat of the second invention, the amounts of change of the movable end side shaft portions of the front link and the rear link in the vertical direction (the height direction) can be most effectively increased while the amounts of change thereof in the front-back direction (the horizontal direction) can be minimized.
According to the vehicle seat of the third invention, the instability in the coordinated rotation of the front link and the rear link can be minimized, so that the front link and the rear link can be stably rotated in conjunction with each other.

### BRIEF DESCRIPTION OF THE DRAWINGS

FIG. 1 is a schematic side view which illustrates a lifting mechanism before a lifting up operation is performed.
FIG. 2 is a schematic side view which illustrates the lifting mechanism after the lifting up operation is performed.
FIG. 3 is a first schematic operational diagram which illustrates an operation of a front link and a rear link.
FIG. 4 is a second schematic operational diagram which illustrates the operation of the front link and the rear link.
FIG. 5 is a third schematic operational diagram which illustrates the operation of the front link and the rear link.
FIG. 6 is a schematic diagram which illustrates a front link and a rear link in a modified form.

### MODE FOR CARRYING OUT THE INVENTION

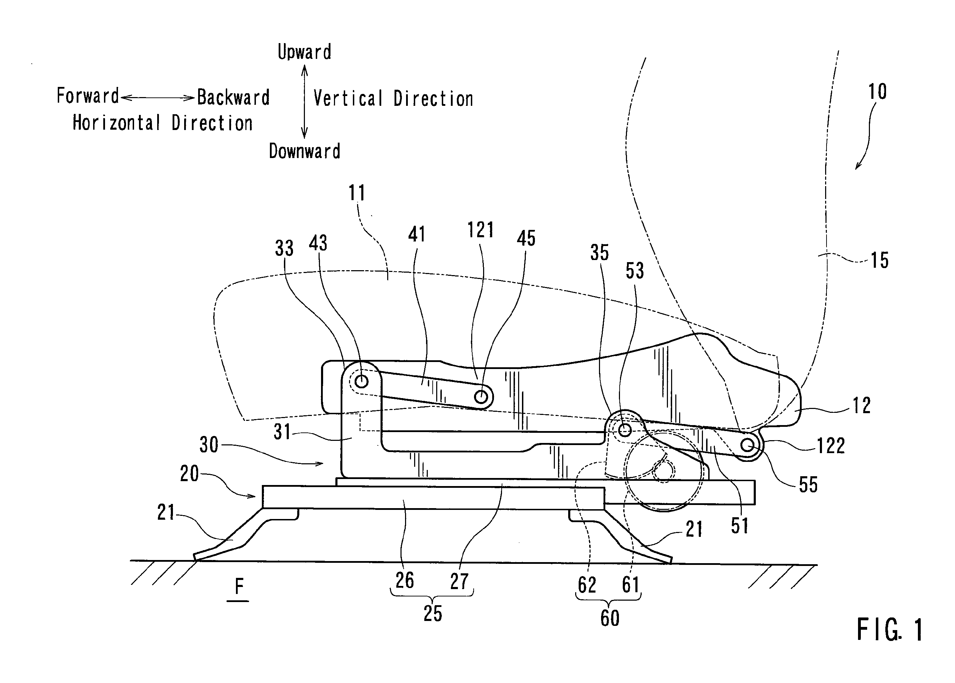

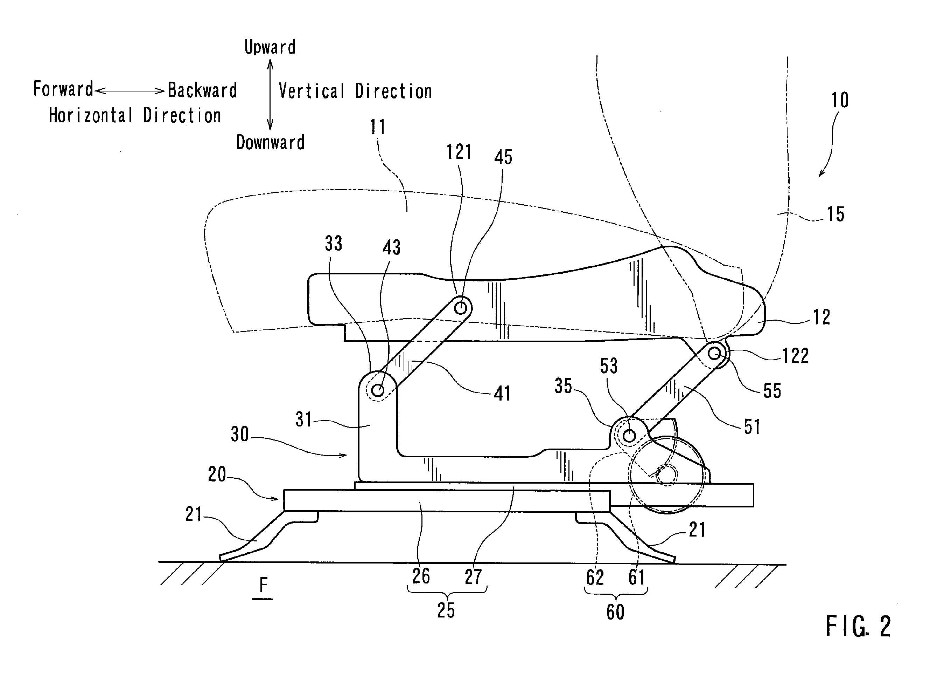

In the following, a vehicle seat according to an embodiment of the present invention will be described with reference to the drawings. FIG. 1 is a schematic side view which illustrates lifting mechanisms 30 before a lifting up operation is performed. FIG. 2 is a schematic side view which illustrates the lifting mechanisms 30 after the lifting up operation is performed. Each of FIGS. 1 and 2 schematically illustrates the lifting up operation of a seat cushion 11 of a vehicle seat 10, in particular, clearly illustrates a cushion frame 12 and the lifting mechanisms 30. Therefore, each of FIGS. 1 and 2 is focused on the cushion frame 12, the lifting mechanisms 30 and slide rail mechanisms 20 with the other components of the vehicle seat 10 being omitted. Further, in each of FIGS. 1 and 2, the left side corresponds to a front side of the vehicle seat 10, and the right side corresponds to a rear side of the vehicle seat 10. Further, in these drawings, an upper side corresponds to an upper side of the vehicle seat 10, and a lower side corresponds to a lower side of the vehicle seat 10. The front, rear, upper and lower sides of the vehicle seat 10 correspond to respective sides of an occupant sitting on the seat cushion 11. Thus, in the following description, a positional relation of the front, rear, upper and lower sides corresponds to a positional relation of front, rear, upper and lower sides in a relative positional relation with reference to the occupant sitting on the seat cushion 11.
The vehicle seat 10 shown in FIGS. 1 and 2 is a vehicle seat that is disposed in a vehicle such as an automobile. The vehicle seat is configured such that the occupant of the vehicle can sit thereon. The vehicle seat has a seat cushion 11 on which the occupant sits, and a seat back 15 which may function as a backrest when the occupant sits on the seat cushion 11. Although not shown in detail, the seat back 15 has an appropriate framework and is supported by a cushion frame 12 which constitutes a framework.
Further, the vehicle seat 10 is constructed such that the seat cushion 11 can be lifted up when the occupant gets in and out of the vehicle (i.e., at a getting in/out time of the occupant) in order to allow the occupant to easily get in and out of the vehicle even if the occupant has insufficient leg strength for getting up from the vehicle seat 10 on their own.

The cushion frame 12 which constitutes the framework of the seat cushion 11 is secured to a vehicle floor F via the slide rail mechanisms 20 and the lifting mechanisms 30.
As described hereinafter in detail, upper ends (movable end side shaft portions 45 and 55) of front links 41 and rear links 51 are rotatably connected to the cushion frame 12. Therefore, the cushion frame 12 has pivot connection portions 121 and 122 for rotatably connecting the movable end side shaft portions 45 of the front links 41 and the movable end side shaft portions 55 of the rear links 51.
The slide rail mechanisms 20 are disposed on the vehicle floor F. As shown in FIGS. 1 and 2, each of the slide rail mechanisms 20 has leg brackets 21 and 21 and a slide rail 25. The leg brackets 21 and 21 are secured to the vehicle floor F by appropriate fastening members, so that the slide rail 25 can be fixedly supported thereon. Thus, the leg brackets 21 and 21 are positioned in right and left pairs in each of front and rear portions of the slide rails 25.
The slide rail 25 has a lower rail 26 and an upper rail 27. The lower rail 26 is fixedly supported via the leg brackets 21 and 21. In particular, a lower portion of the lower rail 26 is secured to upper portions of the leg brackets 21 that are secured to the vehicle floor F. In this way, the lower rail 26 can be secured to the vehicle floor F. The upper rail 27 is attached to the lower rail 26. The upper rail 27 is configured to slide with respect to the lower rail 26 in a longitudinal direction thereof. The upper rail 27 that is slidable relative to the lower rail 26 is configured to be fixed to the lower rail 26 at an appropriate slide position. That is, the upper rail 27 thus secured can be secured to the vehicle floor F via the lower rail 26 and can fixedly supports a link support member 31 of each of the lifting mechanisms 30 which will be hereinafter described.

The lifting mechanisms 30 are positioned between the slide rail mechanisms 20 disposed on the vehicle floor F and the cushion frame 12. Thus, the cushion frame 12 is can be secured to the slide rail mechanisms 20 via the lifting mechanisms 30.
The lifting mechanisms 30 are intended to lift the cushion frame 12 upwards. Each of the lifting mechanisms 30 has a link support member 31, a front link 41, a rear link 51 and a drive mechanism 60.
The link support member 31 is a member that is fixedly supported by the upper rail 27 and supports the front link 41 and the rear link 51. In this embodiment, the link support member 31 corresponds to a base member of the present invention. The link support member 31 has a shaped that is longitudinally extended along the upper rail 27. Further, a lower portion of the link support member 31 is connected to an upper portion of the upper rail 27. Further, the link support member 31 has a front side pivot portion 33 and a rear side pivot portion 35 that are formed in a front position and a rear position thereof and are respectively configured to rotatably support the front link 41 and the rear link 51. The front side pivot portion 33 and the rear side pivot portion 35 project upwards so as to respectively rotatably support lower ends of the front link 41 and the rear link 51 which will be hereinafter described.
Further, as will be described in detail below, with regard to the front side pivot portion 33 and the rear side pivot portion 35, the front side pivot portion 33 which rotatably supports the lower end (a stationary end side shaft portion 43) of the front link 41 is configured to have a vertical position that is higher than a vertical position of the rear side pivot portion 35 which rotatably supports the lower end (a stationary end side shaft portion 53) of the rear link 51. That is, as shown in the drawings, the front side pivot portion 33 rotatably supporting the lower end of the front link 41 projectes upwards further than the rear side pivot portion 35 rotatably supporting the lower end of the rear link 51.

Next, the front link 41 and the rear link 51 will be described.
The front link 41 and the rear link 51 are formed as a so-called parallel link mechanism. In particular, the front link 41 and the rear link 51 are respectively formed as substantially elongated plate-shaped members having the substantially same length. That is, in the substantially elongated plate-shaped front link 41, the lower end thereof is formed as the stationary end side shaft portion 43 that is rotatably connected to the front side pivot portion 33 of the link support member 31, and the upper end thereof is formed as the movable end side shaft portion 45 that is rotatably connected to the pivot connection portion 121 of the cushion frame 12. Also, in the substantially elongated plate-shaped rear link 51, the lower end thereof is formed as the stationary end side shaft portion 53 that is rotatably connected to the rear side pivot portion 35 of the link support member 31, and the upper end thereof is formed as the movable end side shaft portion 55 that is rotatably connected to the pivot connection portion 122 of the cushion frame 12. Further, rotatable connection of each of the stationary end side shaft portions 43 and 53 and the movable end side shaft portions 45 and 55 can be performed via an appropriate pin connection mechanism. Further, the rear link 51 is integrally connected to a driven gear 62 of the drive mechanism 60 which will be hereinafter described.
The drive mechanism 60 may function to rotate the front link 41 and the rear link 51, thereby lifting up or lowering the cushion frame 12. The drive mechanism 60 is arranged so as to drive the rear link 51. The drive mechanism 60 has a drive motor (not shown), a reduction gear 61 that is configured to reduce a driving force of the drive motor, and the driven gear 62 that can be in mesh with the reduction gear 61 such that the reduced driving force can be transmitted thereto. Further, the driven gear 62 is arranged integrally with the rear link 51 such that gear teeth formed therein can be positioned along a rotational direction of the rear link 51.
Thus, when the occupant operates the drive mechanism 60, the drive motor (not shown) is rotationally driven, so that the reduction gear 61 can be rotationally driven. As a result, the reduction gear 61 can drive the driven gear 62 meshed therewith, so as to rotate the rear link 51 that is integrated with the driven gear 62. Further, when the rear link 51 is rotated (driven), the front link 41 can be rotated (concurrently driven) via the cushion frame 12. Upon rotation of the front link 41 and the rear link 51, the cushion frame 12 can be moved toward and away from the vehicle floor F. Thus, a vertical position of the seat cushion 11 can be changed.

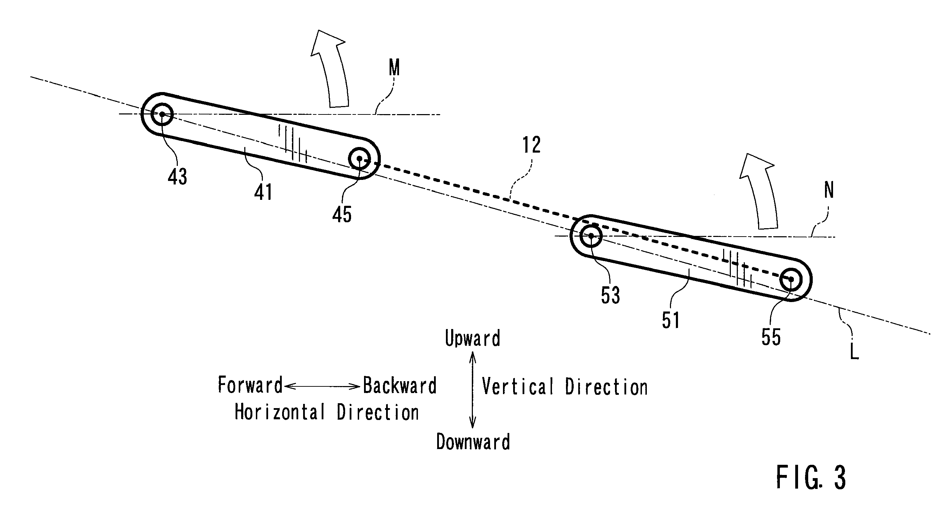

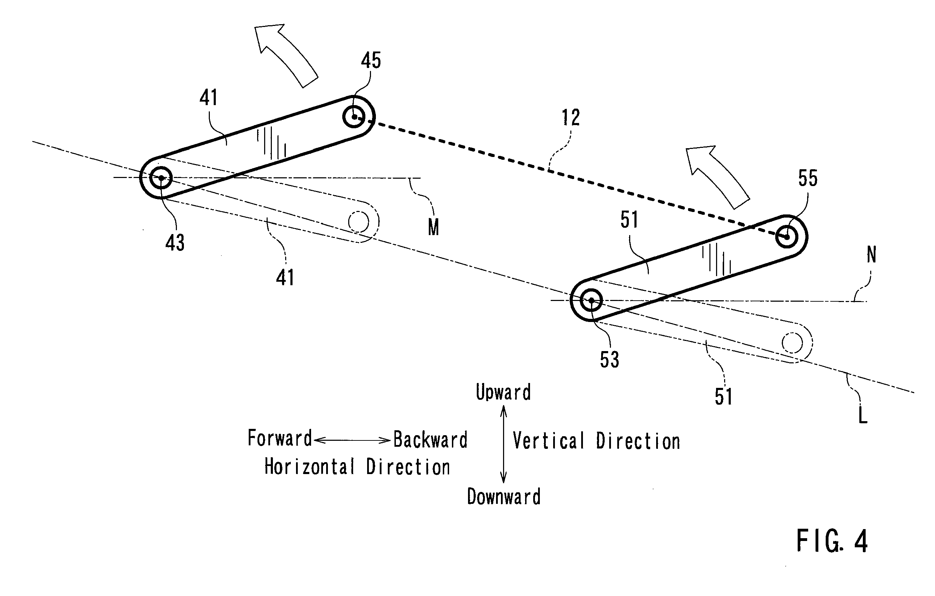

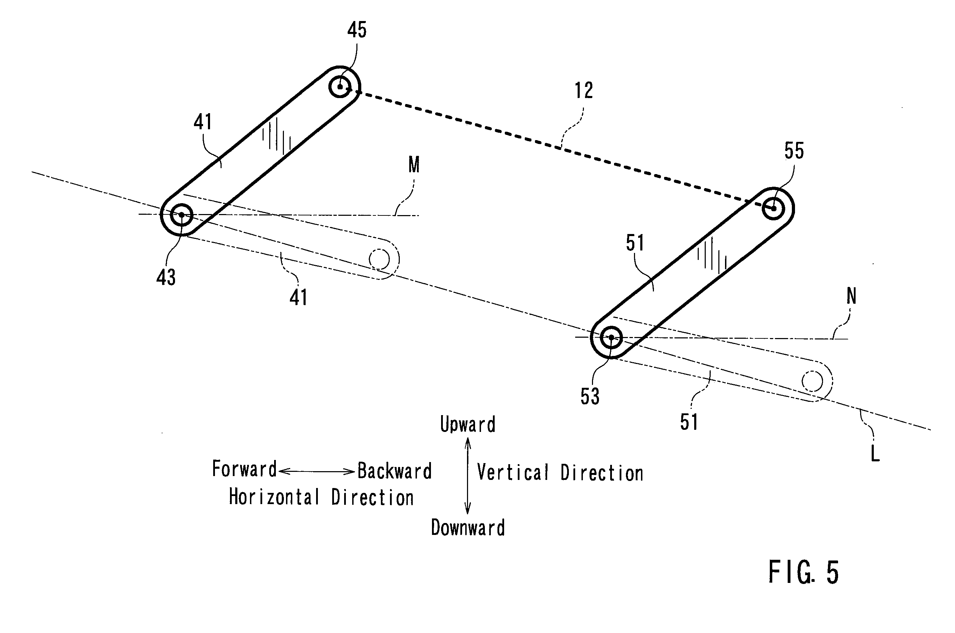

Next, positions of the front link 41 and the rear link 51 will be described with reference to operational diagrams of FIGS. 3 to 5.
Each of FIGS. 3 to 5 schematically illustrates operations of the front link 41 and the rear link 51 constituting each of the lifting mechanisms 30. FIG. 3, FIG. 4 and FIG. 5 are respectively a first schematic operational diagram, a second schematic operational diagram and a third schematic operational diagram. Thus, each of the lifting mechanisms 30 can lift up the cushion frame 12 in the order of FIGS. 3, 4 and 5. Conversely, each of the lifting mechanisms 30 can lower the cushion frame 12 in the order of FIGS. 5, 4, and 3. That is, FIG. 3 shows a condition in which the cushion frame 12 is positioned in a lowermost position, which corresponds to a condition in which the vehicle seat 10 as a whole is in a position shown in FIG. 1. Conversely, FIG. 5 shows a condition in which the cushion frame 12 is positioned in an uppermost position, which corresponds to a condition in which the vehicle seat 10 as a whole is in a position shown in FIG. 2.
Further, a symbol L described in FIGS. 3 to 5 indicates a line connecting the stationary end side shaft portions 43 and 53 of the front link 41 and the rear link 51. The line connecting the stationary end side shaft portions 43 and 53 will be referred to as a rotational center connection line L. Further, a symbol M described in FIGS. 3 to 5 indicates a vertical position that is positioned at the same height as the stationary end side shaft portion 43 of the front link 41, which will be referred to as a horizontal line of the stationary end side shaft portion 43. Conversely, a symbol N described in FIGS. 3 to 5 indicates a vertical position that is positioned at the same height as the stationary end side shaft portion 53 of the rear link 51, which will be referred to as a horizontal line of the stationary end side shaft portion 53. Further, in FIGS. 3 to 5, the cushion frame mentioned above shown by the numeral 12 is schematically shown, and the movable end side shaft portions 45 and 55 of the front link 41 and the rear link 51 are rotatably connected to the cushion frame 12. That is, the movable end side shaft portion 55 of the rear link 51 is capable of rotating in conjunction with the movable end side shaft portion 45 of the front link 41 via the cushion frame 12.

Further, as shown in FIGS. 3 to 5, the rotational center connection line L is raised forwards (toward a front position) or inclined upwards and forwards. In particular, as described above, a vertical position of the stationary end side shaft portion 43 of the front link 41 may be positioned in an upper position that is higher than a vertical position of the stationary end side shaft portion 53 of the rear link 51. Further, a range in which the movable end side shaft portion 45 of the front link 41 can exist during rotation of the front link 41 is set so as to be positioned over a range that straddles the horizontal line M of the stationary end side shaft portion 43 of the front link 41. Conversely, a range in which the movable end side shaft portion 55 of the rear link 51 can exist during rotation of the rear link 51 is set so as to be positioned over a range that straddles the horizontal line N of the stationary end side shaft portion 53 of the rear link 51. That is, when each of the lifting mechanisms 30 lifts up the cushion frame 12 from the lowermost position to the uppermost position, the movable end side shaft portions 45 and 55 of the front link 41 and the rear link 51 may move so as to respectively straddle the horizontal lines (symbols M and N). As shown in FIG. 3, vertical positions of lowermost ends of the movable end side shaft portions 45 and 55 of the front link 41 and the rear link 51 are set so as to be positioned above the rotational center connection line L.

The vehicle seat 10 constructed as described above may provide the following effects.
That is, in the vehicle seat 10 described above, when the front link 41 and the rear link 51 are respectively rotated about the stationary end side shaft portions 43 and 53 as rotation axes, the movable end side shaft portions 45 and 55 of the front link 41 and the rear link 51 can move in a vertical direction (a height direction) while moving in a front-back direction (a horizontal direction). However, the ranges in which the movable end side shaft portions 45 and 55 of the front link 41 and the rear link 51 can exist during the rotation of the links are set so as to be positioned over the ranges that straddle the horizontal lines (the symbols M and N) of the stationary end side shaft portions 43 and 53 of the front link 41 and the rear link 51. Therefore, the ranges may include switching points in which displacement directions of the movable end side shaft portions 45 and 55 can be switched in the front-back direction (the horizontal direction) while the movable end side shaft portions 45 and 55 are displaced in the vertical direction (the height direction). That is, when the movable end shaft portions 45 and 55 move while straddling the horizontal lines (the symbols M and N), the displacement directions of the movable end shaft portions 45 and 55 can be switched in the front-back direction (the horizontal direction) at the moment that the movable end shaft portions 45 and 55 straddle the horizontal lines (the symbols M and N).

Thus, the rotation of the front link 41 and the rear link 51 is set so as to include the switching points in which the displacement directions of the movable end side shaft portions 45 and 55 can be switched in the front-back direction (the horizontal direction) of the movable end side shaft portions 45 and 55. As a result, amounts of change of the movable end side shaft portions 45 and 55 of the front link 41 and the rear link 51 in the vertical direction (the height direction) can be effectively increased as compared with amounts of change of the movable end side shaft portions 45 and 55 in the front-back direction (the horizontal direction). Further, in the vehicle seat 10 described above, the rotational center connection line L is set so as to be raised forwards or inclined upwards and forwards. Therefore, the movable end side shaft portions 43 and 53 can be effectively prevented from being lowered beyond the rotational center connection line L and positioned below the rotational center connection line L. That is, in a case in which the movable end side shaft portions 45 and 55 are moved beyond the rotational center connection line L and positioned below the rotational center connection line L, the coordinated rotation of the front link 41 and the rear link 51 is prone to instability. However, according to the vehicle seat 10 described above, the coordinated rotation of the front link 41 and the rear link 51 can be eliminated from being destabilized, so as to be stabilized. As a result, according to the vehicle seat 10 described above, an amount of change of the seat cushion 11 in the height direction can be increased while an amount of change of the seat cushion 11 in the front-back direction is minimized. Thus, the seat cushion 11 can be advantageously lifted up at the getting in/out time of the occupant.
In the vehicle seat 10 described above, the vertical positions of the lowermost ends of the movable end side shaft portions 45 and 55 are set so as to be positioned above the rotational center connection line L. As a result, the movable end side shaft portions 45 and 55 can be effectively prevented from being lowered beyond the rotational center connection line L and thus prevented from being positioned below the rotational center connection line L. Therefore, the coordinated rotation of the front link 41 and the rear link 51 can be eliminated from being performed in an unstable manner. Thus, the coordinated rotation of the front link 41 and the rear link 51 can be stabilized.

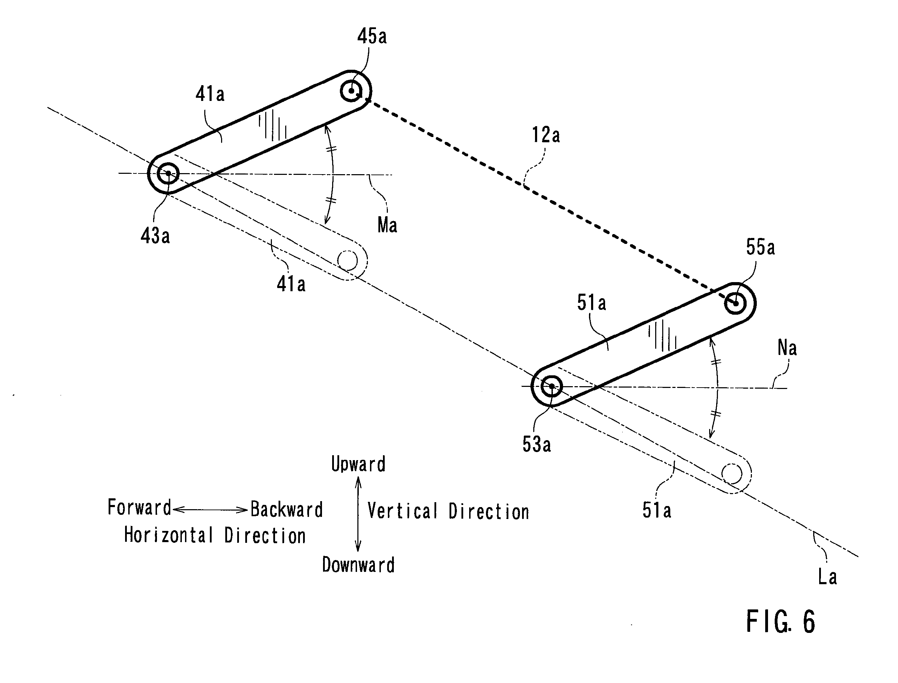

Next, a modified form of the embodiment described above will be described with reference to FIG. 6. FIG. 6 is a schematic diagram which illustrates a front link 41 a and a rear link 51a in a modified form. In the modified form shown in FIG. 6, a range in which each of movable end side shaft portions 45a and 55a of the front link 41a and the rear link 51 a can exist is set so as to include the same rotational ranges above and below horizontal lines (symbols Ma and Na) of stationary end side shaft portions 43a and 53a of the front link 41a and the rear link 51a. Further, in FIG. 6, a cushion frame is shown by a numeral 12a. Further, in FIG. 6, a rotational center connection line connecting the stationary end side shaft portions 43a and 53a of the front link 41a and the rear link 51a is shown by a symbol La.
That is, the front link 41 a and the rear link 51a that are shown by chain double-dashed lines respectively correspond to the front link 4 1 a and the rear link 51a that are positioned at lowermost positions thereof. Contrastingly, the front link 41a and the rear link 51a that are shown by solid lines respectively correspond to the front link 41 a and the rear link 51a that are positioned at uppermost positions thereof. Therefore, upper and lower rotational ranges of each of the front link 41 a and the rear link 51a shown by the chain double-dashed lines (the lower most positions) and the solid lines (the uppermost positions) with respect to the horizontal lines (the symbols Ma and Na) of the stationary end side shaft portions 43a and 53a of the front link 41a and the rear link 51a can be equal to each other.
In the modified form shown in FIG. 6, the range in which each of the movable end side shaft portions 45a and 55a of the front link 41a and the rear link 51a can exist is set so as to include the same rotational ranges above and below the horizontal lines (the symbols Ma and Na) of the stationary end side shaft portions 43a and 53a. Therefore, rotational ranges of the front link 41 a and the rear link 51 a can be set while the switching points in which displacement directions of the movable end side shaft portions 45a and 55a can be switched in the front-back direction (the horizontal direction) are positioned in intermediate positions. As a result, amounts of change of the movable end side shaft portions 45a and 55a of the front link 41a and the rear link 51a in the vertical direction (the height direction) can be most effectively increased while amounts of change thereof in the front-back direction (the horizontal direction) can be minimized.

The vehicle seat according to the present invention is not limited to the embodiment described above and the embodiment can be changed appropriately.
For example, each of the front link 41 and the rear link 51 in the embodiment described above is formed as a substantially elongated plate-shaped straight member. However, each of the front link and the rear link of the present invention is not limited to such a substantially elongated plate-shaped straight member and may be a curved member that is configured to not interfere with various structural components. That is, the front link and the rear link cannot be limited in shape provided that the front link and the rear link can be formed as the parallel links.

### DESCRIPTION OF SYMBOLS

- 10: vehicle seat
- 11: seat cushion
- 12, 12a: cushion frame
- 121, 122: pivot connection portion
- 15: seat back
- 20: slide rail mechanism
- 21: leg bracket
- 25: slide rail
- 26: lower rail
- 27: upper rail
- 30: lifting mechanism
- 31: link support member
- 33: front side pivot portion
- 35: rear side pivot portion
- 41,41a: front link
- 43, 43a: stationary end side shaft portion
- 45, 45a: movable end side shaft portion
- 51,51a: rear link
- 53, 53a: stationary end side shaft portion
- 55, 55a: movable end side shaft portion
- 60: drive mechanism
- 61: reduction gear
- 62: driven gear
- F: vehicle floor
- L, La: rotational center connection line
- M, Ma: horizontal line of (front) stationary end side shaft portion
- N, Na: horizontal line of (rear) stationary end side shaft portion

## Claims

1. A vehicle seat in which a seat cushion can be lifted up when an occupant gets in and out of a vehicle,
wherein positioned between a base member disposed on a vehicle floor and a cushion frame constituting a framework of the seat cushion are a front link and a rear link for lifting up the cushion frame, the front link and the rear link being respectively positioned in a front position and a rear position in a front-back positional relation in a relative positional relation with reference to an occupant sitting on the seat cushion,
wherein lower end side portions of the front link and the rear link are respectively formed as stationary end side shaft portions that are rotatably connected to the base member,
wherein upper end side portions of the front link and the rear link are respectively formed as movable end side shaft portions that are rotatably connected to the cushion frame,
wherein a connection line connecting the stationary end side shaft portions of the front link and the rear link is set so as to be raised toward the front position in the front-back positional relation or inclined upwards and forwards, and
wherein ranges in which the movable end side shaft portions of the front link and the rear link can exist during the rotation of the front link and the rear link are set so as to be positioned over ranges that straddle horizontal lines of the stationary end side shaft portions of the front link and the rear link.

2. The vehicle seat as defmed in claim 1, wherein the range in which each of the movable end side shaft portions of the front link and the rear link can exist during the rotation of the front link and the rear link is set so as to include the same rotational ranges above and below the horizontal line of each of the stationary end side shaft portions of the front link and the rear link.

3. The vehicle seat as defined in claim 1 or claim 2, wherein vertical positions of lowermost ends of the movable end side shaft portions of the front link and the rear link are respectively set so as to be positioned above the connection line connecting the stationary end side shaft portions of the front link and the rear link.
